Europäisches Patentamt

(19) European Patent Office

Office européen des brevets

(11) Publication number: **0 131 628**
**B1**

(12) **EUROPEAN PATENT SPECIFICATION**

(45) Date of publication of patent specification: **23.11.88**

(51) Int. Cl.⁴: **G 01 M 3/04, G 01 M 3/22**

(21) Application number: **84900800.8**

(22) Date of filing: **18.01.84**

(86) International application number:
**PCT/US84/00078**

(87) International publication number:
**WO 84/02978 02.08.84 Gazette 84/18**

(54) METHOD AND APPARATUS FOR LEAK TESTING OF PIPE.

(30) Priority: **18.01.83 US 458790**

(43) Date of publication of application:
**23.01.85 Bulletin 85/04**

(45) Publication of the grant of the patent:
**23.11.88 Bulletin 88/47**

(84) Designated Contracting States:
**AT DE FR GB NL**

(56) References cited:
**GB-A-2 055 210**
**GB-A-2 056 091**
**US-A-2 703 978**
**US-A-3 899 920**
**US-A-4 158 960**
**US-A-4 282 743**

(73) Proprietor: **DAMCO TESTERS, INC.**
**Highway 171 P.O. Box 1267**
**Houma, LA 70361 (US)**

(72) Inventor: **MILLER, Ronnie, Floyd**
**1600 Chantilly Street**
**Houma, LA 70360 (US)**
Inventor: **DWYER, Arthur, Lance**
**101 Aspen Drive**
**Houma, LA 70360 (US)**
Inventor: **MILLER, Darwin, Adrian**
**Little Bayou Black Drive P.O. Box 1267**
**Houma, LA 70360 (US)**
Inventor: **MILLER, Darwin, Ladon**
**200 Bubby Drive**
**Houma, LA 70360 (US)**

(74) Representative: **Haigh, Charles Roy et al**
**J.A. KEMP & CO. 14 South Square Gray's Inn**
**London WC1R 5EU (GB)**

Courier Press, Leamington Spa, England.

## Description

### Technical field

This invention relates to leak testing of pipe sections by means of a pressurized test gas, and more particularly to a method and apparatus for testing for minute leakage at a test section and including an enclosure device for confining any test gas that leaks through the test section.

The testing of fluid conduits for leak tightness is a common requirement, especially in the oil and gas well field. In the oil field, the testing of pipe joints is especially important to prevent leakage of the gas or oil out of the pipe and loss into the surrounding ground around the bore hole. Typically in such applications, a hole is drilled in the earth, and as the depth of the hole increases a well casing, in the form of a pipe, is inserted behind the drill to define the well bore and to permit the introduction and withdrawal of drilling fluids, as well as the withdrawal of drilling debris. Several sections of such a well casing when connected together are referred to as a well string, and the string is defined by a series of interconnected pipe sections, the interconnections most often being accomplished by means of an internally threaded union which engages corresponding external threads at each of the opposed ends of the pipe sections to be joined.

### Background art

Testing of such pipe joints for leak tightness has most often been accomplished by subjecting the pipe joint to high internal fluid pressures. A suitable pipe testing tool is introduced into the interior of the pipe, the tool being such that it includes spaced resilient packing glands which are radially extendable against the interior surface of the pipe on opposite sides of the area to be tested to thereby define an annular space into which a pressurised liquid, such as water, can be introduced. Such tools are shown in US Patent No. 3 899 920. Any leakage of water through the joint can then be visually detected, whereupon suitable corrective action can be taken.

In addition to the use of pressurised water, it has become accepted practice when testing pipe for deeper wells to employ pressurised gas or gases, especially nitrogen gas, to check pipe joints for leak tightness. This is particularly true for testing leak tightness at pressures in excess of about 690 bar (10000 psi). A similar pipe testing tool is employed to introduce the pressurised gas to the interior of the pipe and a liquid film is applied to the outside surfaces of the joint in order visually to observe leaking gas bubbles.

Alternatively, when pressurised nitrogen gas has been used in the testing tool, a cup-like member was positioned around and under the exterior of the joint section to be tested and tightly engaged the section of pipe immediately below the test section to define an external annular chamber open at the top and closed at the bottom. Water was placed in the annular chamber, and a leak site manifested itself by the appearance of nitrogen bubbles rising in the surrounding water, which can be visually detected. An example of such a "bubble bucket" is shown in US—A—3,385,103.

Nitrogen gas has limitations with respect to the size of leak sites which can be detected and the speed with which nitrogen gas can disclose the existence of very small leak passages. As well known in the art, the speed by which a leak is detected is very important in the oil field inasmuch as the time necessary to make the test is lost and cannot be recovered in the drilling operations. Hence, time saved in conducting the test is time and money saved in drilling the well.

Another method, not used in the oil field, for checking for small leaks in pipe connections involves the use of a pressurized gas, the escape of which is sensed by a suitable sensing probe. The output of the sensing probe, which will detect minute quantities of the gas, is then displayed on a meter, screen, or the like. However, because of possible dissipation into the atmosphere by air currents, minute amounts of leakage gas could easily escape detection. A suitable enclosure has been disclosed to surround the test section and thereby prevent dissipation into the atmosphere of the test gas which leaks through the joint. An example of one form of enclosure to accomplish that purpose is shown and described in US—A—4,282,743. However, this enclosure is not used in conjunction with an internal tool to introduce the gas and seal off the section to be tested, and the fitting arrangement disclosed is a two-piece structure which must be carefully assembled around the section to be tested and thus is too cumbersome to use in the oil field.

It is therefore desirable to provide an improved method and apparatus for pressurised testing of oil field pipe using a gas mixture that can pass through extremely small leak sites, which are too small to pass pure nitrogen gas, and which can be detected much more rapidly than pure nitrogen through leak sites that pass nitrogen but only at a slow rate.

In addition to providing an improved test gas mixture, it is also desirable that an improved leak test enclosure and pressurising system be provided for use in conjunction with an appropriate internal pipe testing tool, wherein the pressurising system permits pressurisation of the test gas to high pressures while minimising dangerous risks on the rig floor previously encountered and the enclosure is more convenient to use and can rapidly be applied to and removed from the pipe connection to be tested.

It is the principal object of the present invention to provide an improved apparatus and method of testing pipe sections for leakage using a test gas mixture that can rapidly pass through extremely small leak sites to permit rapid leak detection.

As later disclosed, a leak test enclosure is described for use in conjunction with an appropriate internal pipe testing tool for sensing the leaking gas or the gas mixture. The leak test enclosure may be flexible and removable so as to be quickly positionable about a test section.

Another object of the present invention is to provide a unique system for pressurising the test gas mixture in combination with an appropriate internal pipe testing tool whereby the tool is activated and set in the pipe section to be tested at substantially the same pressure as the pressure of the test mixture used in testing the pipe section.

GB—A—2 055 210 and GB—A—2 056 091 show separate fluids being supplied to pressurise the tool and as a source of test gas. The present invention simplifies these prior proposals by using the single pressurised gas for both purposes and also provides a particularly simple and efficient method and means for providing the very high pressure test gas for supply to the test tool.

As later described by way of example, the test gas in the form of a gaseous mixture of helium and a carrier gas is introduced at the test section by an appropriate internal pipe testing tool. The internal pipe testing tool used in the present invention relies upon a single source of high pressure gas both to set the tool inside the pipe section to be tested and to exit the tool and test the pipe section. The test gas must contain a detectable percentage of helium so that its escape through very small leak sites can be detected. A ratio of helium to carrier gas greater than at least about 1:10 by volume has been found preferred. The internal tool and pipe section are both pressurised with the test gas to substantially the same internal pressure of from about 207 bar to 1380 bar (about 3000 psi to 20000 psi) and the presence of leakage of the helium gas at the test section is sensed.

The enclosure for confining adjacent to the test section the test gas that has leaked through the test section is later examplified as comprising a unitary, substantially gas impermeable flexible body having a pair of spaced open ends defined by resilient, substantially gas impermeable end sealing means to close the ends of the body portion when the enclosure is assembled in substantially fluid-tight engagement with the exterior of the pipe around the section to be tested. Closing means carried by the enclosure are provided to permit the body to define a chamber around the test section to confine the test gas therewithin.

In another embodiment the enclosure is in the form of a flexible sheet which includes longitudinally spaced stiffener members that serve to space the enclosure from the outer periphery of the test section and provide a chamber therearound.

Brief description of drawings

Figure 1 is a schematic view showing gas pressurization and leak detection apparatus for testing the leak tightness of pipe joints in accordance with the present invention.

Figure 2 is a fragmentary perspective view of a pipe section including one form of leak test enclosure.

Figure 3 is a longitudinal cross-sectional view taken along the line 3—3 of Figure 2.

Figure 4 is a transverse cross-sectional view taken along the line 4—4 of Figure 2.

Figure 5 is a fragmentary perspective view of a pipe joint section including another form of leak test enclosure.

Figure 6 is a transverse cross-sectional view taken along the line 6—6 of Figure 5.

Figure 7 is a plan view of the enclosure shown in Figure 5 after the same has been removed from the pipe and has been fully opened.

Figure 8 is a fragmentary perspective view of a pipe section showing another form of leak test enclosure.

Best mode for carrying out the invention

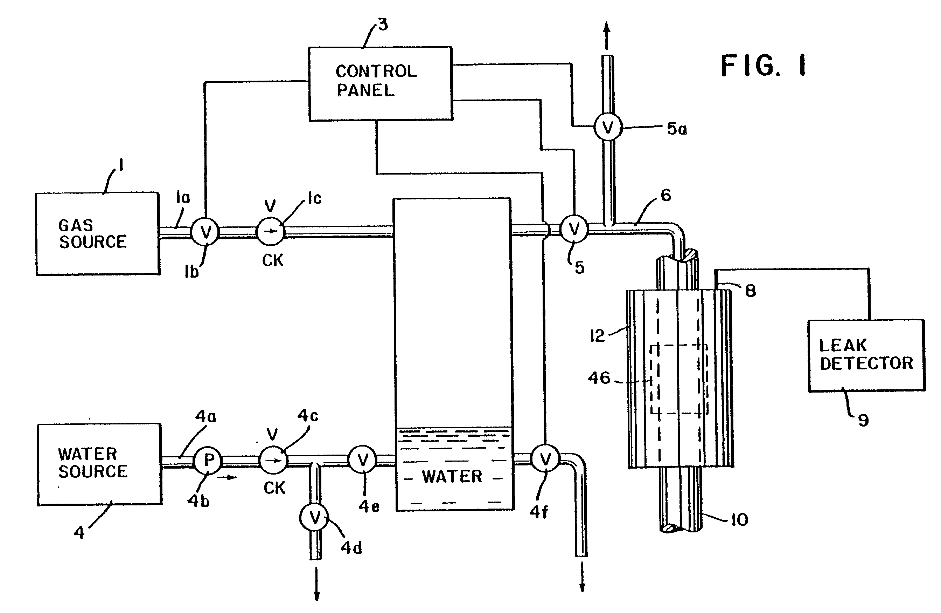

Referring now to the drawings, and particularly to Figure 1 thereof, there is shown a section of pipe 10, a portion of which is surrounded by one form of leak test enclosure 12. The pipe section includes a joint or union 46 by which two portions of pipe are joined together. A detection probe 8 is provided to detect leakage of test gas that is fed under pressure into pipe section 10. The probe is connected to a gas detector 9 to provide either a visual or other convenient indication of leakage of the test gas from inside the pipe section through the joint and into enclosure 12. One type of suitable gas detector that can be used to detect leakage of the test gas is a GOW-MAC Gas Leak Detector, Model No. 21-250, Manufactured by GOW-MAC Instrument Co., Bridgewater, New Jersey.

The test gas, the composition of which will be described hereinafter in more detail, is provided from a gas source 1 to an accumulator, in the form of a pressure vessel, through a pipe 1a, a remotely controlled gas fill valve 1b, and a check valve 1c. Fill valve 1b can be pneumatically or electrically operated from a remote control panel 3 to permit the test gas to enter the accumulator until pressure equilibrium with the gas source takes place, which can be, for example, at a pressure of from about 28 to 69 bar (400 psi to about 1000 psi). Additional pressurization of the gas to the desired test pressure, which can be of the order of about 690 bar (10,000 psi) or more, is obtained by introducing a pressurized liquid, such as water, into the lower portion of accumulator 2 from a water source 4, through pipe 4a, by means of pump 4b. A check valve 4c is provided to prevent backflow and a manually operated relief valve 4d is provided. An isolation valve 4c is provided in the event repairs are desired to be made upstream of valve 4c without relieving the pressure in accumulator 2. A relief valve 4f remotely operated from control panel 3 is provided to permit bleed-off of water, and consequent reduction of pressure, after a pressure test has been completed.

3

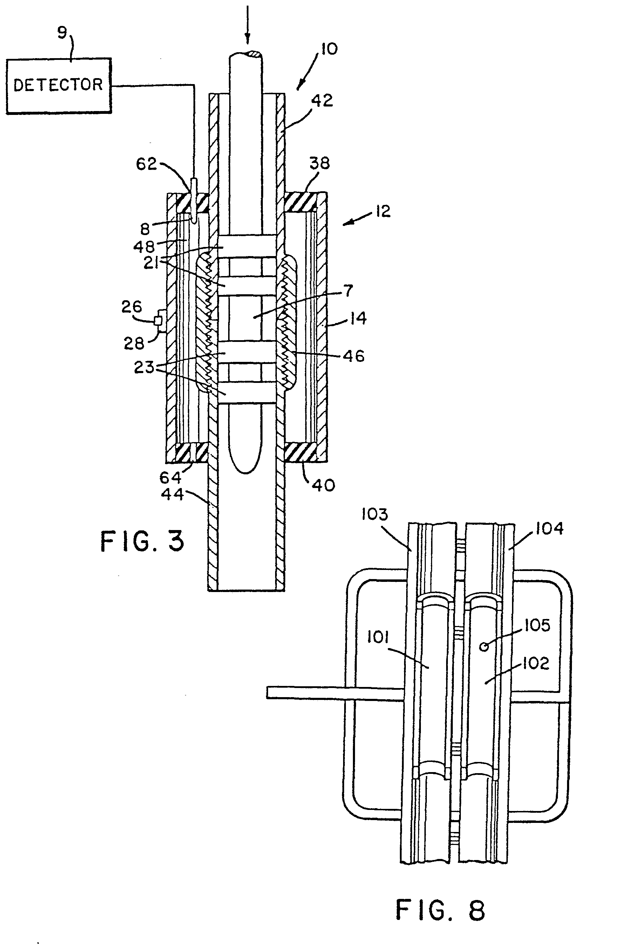

After pressurization of the test gas in accumulator 2 to the desired test pressure, a gas supply valve 5 is remotely operated from control panel 3 to admit pressurized test gas into pipe 6 that is connected with test tool 7 (see Figure 3) positioned within the pipe. Any temporary reduction in pressure is eliminated by pumping more water into the accumulator. In the form of test tool shown only a single source of pressurized gas is fed to the test tool. The pressurized gas sets the seals of the test tool against the internal wall of the pipe to define the section to be tested. At the same time, the pressurized gas exits from the tool into the annular space between the outside of the tool and inside of the pipe section under test as defined by set seals. As a result, the pressurized gas which sets the seals of the test tool and the pressurized gas which tests the pipe section for leaks are substantially the same pressure.

After the test has been completed, the relief valves 4d and 4f are opened and the compressed gas in the test tool forces the water, or other hydraulic fluid, back out of the accumulator. These valves remain open until gas starts to escape, after which they are closed. The gas supply valve 5 is also closed, thus trapping most of the gas in the accumulator. The remote atmosphere gas bleed off valve 5a is then opened to allow any gas trapped between the accumulator and the test tool to escape. It is then closed and the cycle can start again.

By this hydraulic system of pressurization of the test gas, the accumulator can be located at a position remote from the rig floor and the control panel. Thus, the control panel can be operated at the rig floor but the sometimes dangerous accumulator can be located where any rupture or breakage due to high pressures will not cause any injury.

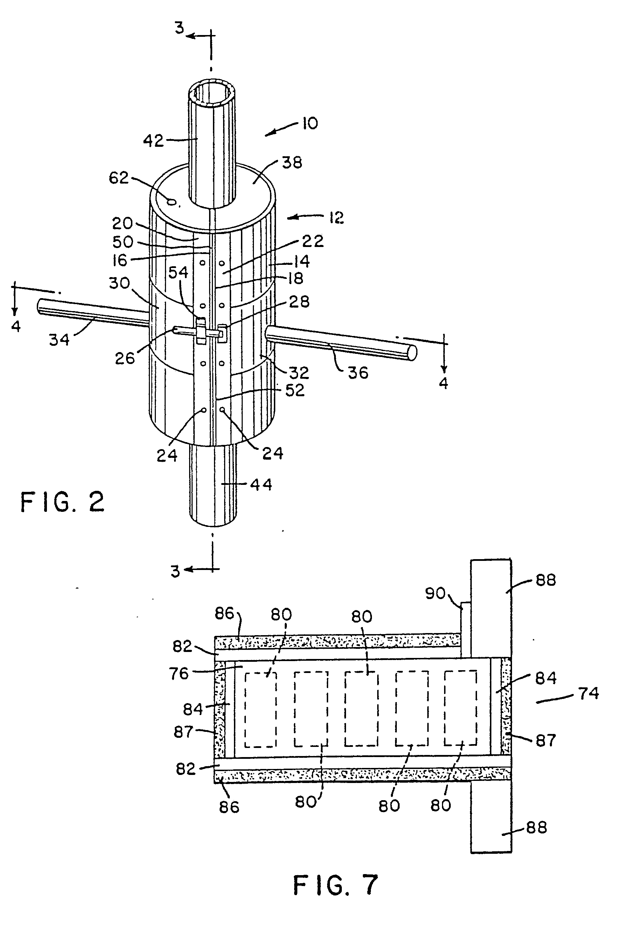

As shown in Figure 2, enclosure 12 includes a generally tubular body 14 which is split longitudinally to define a pair of opposed longitudinal edges 16, 18. Adjacent each of longitudinal edges 16, 18 is a stiffener bar 20, 22, respectively, which can be secured thereto by means of bolts 24, or the like. Stiffener bars 20, 22 each include one element of a locking bar arrangement, stiffener 20 carrying a notched locking bar 26, and stiffener 22 carrying a notched retainer 28, the arrangement and operation of which will hereinafter be described in more detail. Positioned circumferentially about the outer periphery of the body and suitably secured to stiffener bars 20, 22 are a pair of arcuate handle supports 30, 32, respectively, which extend for approximately 90° of arc in opposite directions around tubular body 14. Extending outwardly from each of handle supports 30, 32 is a spreader handle 34, 36, respectively, each of which preferably is positioned on opposite sides of body 14 to facilitate the separation and spreading of longitudinal edges 16, 18.

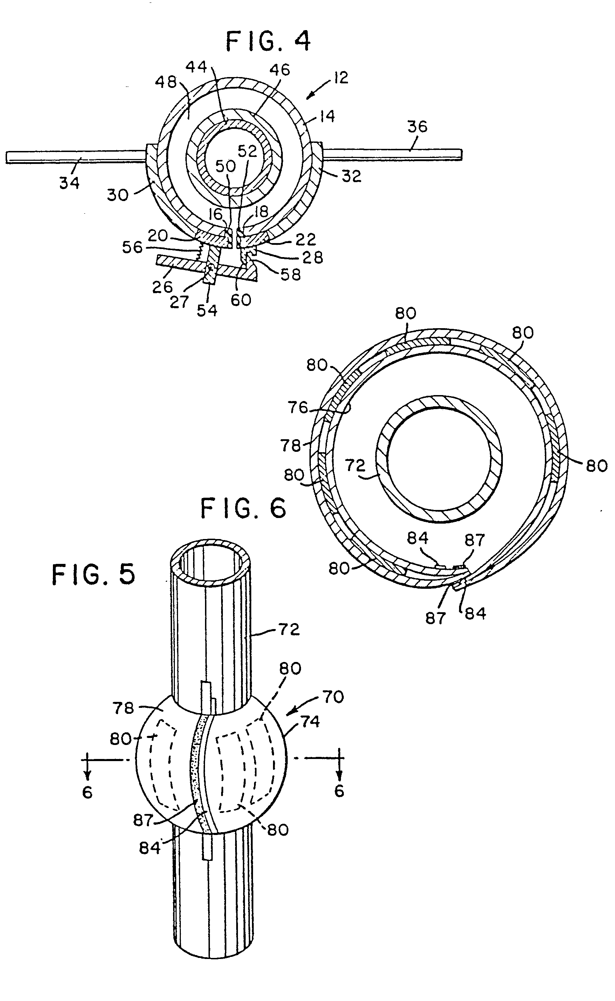

Each of the ends of tubular body 14 includes a transversely extending, inwardly directed, resilient seal 38, 40 (only one of which is visible in Figure 2), that is adapted to sealingly engage the outer surfaces of the pipe sections 42, 44 which are joined by union 46 (see Figures 3 and 4), and provide a seal between the respective pipes adjacent the joint and tubular body 14 to prevent dissipation of any test gas that leaks into the annular chamber 48 therebetween. Seals 38, 40 are of generally annular conformation. Flexible seals 50, 52 are positioned along each of longitudinal edges 16, 18, respectively, to assist in preventing the dissipation of any test gas that leaks into annular chamber 48. Although two seals 50, 52 are shown, it is not essential that two seals be used, and a single seal secured to either of longitudinal edges 16 or 18 can be employed, if desired.

The locking means for holding seals 50, 52 in sealing engagement is most clearly seen in Figure 4. Notched retainer 28 is positioned on longitudinal stiffener 22 intermediate the ends thereof. Locking bar 26 is pivotally secured to a yoke member 54 which is, in turn, secured to longitudinal stiffener 20 intermediate the ends thereof. Biasing means, such as spring 56, is provided and bears against locking bar 26 outwardly of the pivot 27 to urge the notch thereof toward notched retainer 28. As can be seen in Figure 4, locking bar 26 and retainer 28 have cooperable notched edges 58, 60, respectively, which are so positioned relative to each other that longitudinal edges 16, 18, respectively, are held in tight engagement when the locking means is engaged.

As best seen in Figure 3, a typical pipe joint includes a threaded union 46 which engages corresponding external threads on each of adjacent pipe sections 42, 44, and defines part of the inner surface of annular chamber 48. Internal test tool 7 is positioned within the pipe adjacent the joint section to be tested, with upper seal or seals 21 above the joint and lower seal or seals 23 below. Prior to pressurizing the tool, the outside diameter of the seals 21 and 23 are sufficiently smaller than the internal diameter of the pipe to allow the tool to travers easily therein. Upon pressurization, the seals expand to engage the internal diameter of the pipe and seal the section to be tested.

Also provided in tubular body 14 are a probe aperture 62 through which a suitable sensing probe 8 can be inserted in order to sense the presence of leakage gas that flows from a defective joint into annular chamber 48. Additionally, a small vent aperture 64 can be provided to permit the inflow of a small amount of air to replace the gas sample that is withdrawn by the sensing probe. Vent aperture 64 prevents the formation of a slight vacuum, which could otherwise develop if the gas withdrawn through the sensing probe is not replaced by a corresponding volume of air.

Tubular body 14 is preferably formed from a substantially gas impermeable material which is sufficiently flexible to permit the opening of the slot defined by longitudinal edges 16, 18 and at the same time sufficiently resilient to permit enclosure 12 to assume its original shape when the spreading force for opening the slot are relaxed. Suitable materials include flexible sheet metal, or plastics, such as tubular polyurethane, polyvinyl chloride, or the like.

In operation, union 46 is threadedly secured to an end of the pipe section 44, and an end of pipe section 42 is threadedly engaged with the upper portion of union 46 to define a complete joint. Thereupon test enclosure 12 of the present invention is positioned about union 46 by spreading handles 34 and 36 until longitudinal edges 16 and 18 are separated a distance sufficient to permit the enclosure to be placed over the pipe section. Once enclosure 12 is in position, the spreading forces on handles 34 and 36 are released, and the resilience of tubular body 14 causes longitudinal edges 16 and 18 to move close to each other. Closing forces are then applied to spreader handles 34 and 36 to bring edges 16 and 18 together so that seals 50 and 52 are in sealing engagement. The locking means is actuated by continued closing pressure on the spreader handles until a point is reached where the notches 58 and 60 on locking bar 26 and notch retainer 28, respectively, are engaged by the action of biasing spring 56. Thereafter the closing forces on spreader handles 34 and 36 are released and the locking means maintains the enclosure in a closed condition.

After the enclosure is properly positioned around the joint, the interior pipe 10 adjacent the joint is pressurized by means of a high pressure test gas. Preferably, the test gas includes at least about 9% by volume helium. If the joint is gas-tight, none of the pressurized test gas will leak into annular chamber 48 between the pipe joint and the enclosure. If a leak exists, then pressurizing gas including a tracer (preferably helium) will leak into annular chamber 48 and the sensing probe inserted through probe aperture 62 will detect the presence of the tracer gas by withdrawing a portion of the gas in the annular space for analysis by a spectrophotometer, or by another suitable sensing device capable of detecting and indicating the presence of the tracer gas. The withdrawn gas sample can be replaced by air which is permitted to enter the enclosure through vent aperture 64.

Another embodiment of the enclosure is illustrated in Figures 5—7, inclusive, which provides another form of enclosure 70 positioned about a pipe 72 and which functions in a manner similar to the embodiment of Figures 2—4, inclusive. Structurally, however, enclosure 70 is provided as a flexible wrap 74 that is adapted to be wrapped around pipe 72. Wrap 74 includes an inner face 76, an outer face 78, and a plurality of longitudinally spaced, arcuate stiffener members 80 positioned to provide body to the wrap so that when it is wrapped around a test section, stiffeners 80 will prevent the complete inward collapse of wrap 74 and will cause substantial inner portions thereof to be spaced from the outer periphery of pipe 72 a sufficient distance to define an enclosed chamber into which a sensing probe (not shown) can be inserted. Although shown in Figure 5 as positioned between inner face 76 and outer face 78, stiffeners 80 can also be positioned directly on either of those faces, if desired, so long as they are capable of spacing a portion of the wrap from the outer surface of pipe 72.

As shown in Figure 7, wrap 74 is of generally rectangular configuration, with the major dimension thereof arranged around the outer surface of pipe 72 as shown in Figure 5. A pair of resilient longitudinal seals 82, which can be solid or foamed rubber or plastics, is positioned at inner surface 76 prallel to and spaced inwardly of the longer edges of wrap 74, and similar seals 84 are positioned along the shorter edges thereof on both faces of the wrap to permit either shorter edge thereof to overlie the other when the wrap is installed for use.

Positioned along each of the longer edges and outwardly of each of seals 82 is a separable connecting means to permit removable engagement of portions of the longitudinal edges when the same are in overlapped condition. A suitable connecting means is a pair of cooperating strips 86 of material known as "Velcro" which on one surface consists of a series of loop-type elements, and on the opposed, engaging surface it includes a plurality of outwardly extending, hook-like elements. Similar separable connecting means 87 are provided at the edges of the wrap.

Also positioned on flexible wrap 74 and preferably at one pair of adjacent corners thereof are tabs 88 to provide a gripping means to facilitate the installation of the device around pipe 72 and to permit the respective longitudinal edges thereof to be drawn into tight engagement with the pipe outer surface to prevent dissipation of test gas by wind or other external air currents.

Suitable sheet materials for forming the flexible wrap are plastic films or other substantially gas impermeable materials, a pair of which can be sealed or otherwise joined along their marginal edges to provide inner face 76 and outer face 78 and within which stiffener members 80 can be positioned. A suitable plastic film is polyvinyl chloride. Stiffeners 80, which are of curved shape, are preferably positioned in longitudinally spaced relationship along wrap 74 and can be formed from any rigid yet resilient materials, such as sections of plastic tubing having sufficient thickness to provide rigidity. The several stiffeners can be retained in spaced pockets (not shown) formed between the inner and outer faces of the wrap. Additionally, stiffeners 80 can also be secured to the inner or outer faces of wrap 74, if desired.

The wrap of Figure 7 is shown installed for use on a section of pipe in Figures 5 and 6, wherein the longitudinal edges are shown to be in peripheral contact with the outer surface of pipe 72. As in the embodiment of Figures 2 to 4, a sensing probe aperture 90 is provided and can be in the form of a tubular member 90 which extends from the interior surface of the wrap 74 to an outer longitudinal edge in order to provide an entry passageway for a sensing probe. If desired, a similarly configured tubular vent aperture (not shown) can also be provided, for example, on the opposite edge of wrap 74 from tubular member 90, to permit a small amount of air to enter the enclosure and replace the gas volume withdrawn by the sensing probe, thereby preventing the pressure within the enclosure from dropping below the atmospheric pressure.

Another form of test enclosure is illustrated in Figure 8. As there shown a pair of resilient, split enclosure halves 101, 102 are secured to and carried by a pair of steel outer casings 103, 104. The enclosure halves 101, 102 function in a manner similar to the embodiments of Figures 2—4 and include a probe aperture 105. The steel outer casings provide increased safety for those in the vicinity of the test enclosure by laterally containing any fragments or high gas pressures that might occur in the event of rupture or other failure at the joint. Locking means similar to that illustrated in Figure 4 can be provided on casings 103, 104 to securely lock them together.

Thus it can be seen that the leak test enclosure herein described provides a rapid and secure means for enclosing a test section for confining leakage of tracer gas utilized to test for joint leakage. The device does not involve the necessity for using water for detecting gas bubbles, and therefore it is usable in even the coldest weather, when freezing of water would be a problem. It also eliminates the need to periodically replenish any water which may have been lost as a result of axial movement, relative to the pipe sections, of the previously-used bubble bucket over various enlarged areas of pipe, which can cause deflection of the bucket lower seal with consequent loss of water.

It has been discovered that helium, as the tracer or test gas, either alone or in combination with another inert gas or gases, such as nitrogen, in a gas mixture containing a critical minimum level of helium, produces unexpected results in detecting previously undetectable, very small leak passages in oil field pipe, and reduces the test time for detecting somewhat larger leak passages than previously possible with prior known pressurized gas systems. Without intending to be limited, it is believed that helium is superior to prior pressurized gas systems, particularly nitrogen used in the prior systems, for the following reasons. Methane is the principal constituent of subterranean gas, which is under high pressure within the drill string. Nitrogen has a higher molecular weight and, therefore, a higher mass than methane. Thus, when nitrogen is used as the test gas for detecting leaks in a drill pipe section, the nitrogen cannot escape from very small leak passages that might otherwise allow methane to escape, and it will flow through very small but passable leak sites at a slower rate than methane. On the other hand, helium has a lower molecular weight and, therefore, a lower mass than methane, and much lower than nitrogen. Thus, it is hypothesized that helium can detect very small leak passages, smaller than those detectable by nitrogen gas, and can detect small but passable leak sites at a more rapid rate than nitrogen, because its molecular size is smaller than methane, and much smaller than nitrogen. In other words, because helium has a lower molecular weight and, therefore, a lower mass than does methane, helium should be capable of detecting all leak sites which might pass subterranean gas (essentially methane), even leak sites that would not pass nitrogen, as well as more rapidly detecting somewhat larger leak sites which are capable of passing nitrogen, but only at a slow rate. Other gases which have similar molecular weight and mass characteristics as helium with respect to methane could be used in the present invention, such as hydrogen and oxygen, if they were not otherwise objectionable. However, neither hydrogen nor oxygen can be used in accordance with the present invention because of their combustibility in the environment in which the present invention is used. Helium gas possesses all of the necessary qualities for carrying out the present invention. Other gases that are also suitable include: ethane (3.0%), methane (5.0%), monochloromethane, fluorotrichloromethane, dichlorodifluoromethane, chlorotrifluoromethane, dichloromonobromomethane, monochlorodifluoromethane, sulfur hexafluoride, and propane (2.1%), among others, the parenthetical weight percentages given reflecting approximate maximum concentrations for safe operation.

Tests using a GOW-MAC Model No. 21-250 gas leak detector to measure leak rates through a given leak site have shown that the leak rate for helium is approximately 2.6 times that for nitrogen. Table I on the following page presents the leakage rates which correspond with a given reading on a GOW-MAC detector for a given leak site.

TABLE I
Helium leak rate comparison to nitrogen leak rate
and its detection using a GOW-MAC detector

| Helium leak rate | | Divisions of deflection on GOW-MAC detector (metal units) | Nitrogen leak rate | |
|---|---|---|---|---|
| (cm³/sec) | (ppm)* | | (cm³/sec) | (ppm)* |
| $1.1 \times 10^{-5}$ | 10 | 10 | $0.41 \times 10^{-5}$ | 3.8 |
| $2.2 \times 10^{-5}$ | 20 | 20 | $0.83 \times 10^{-5}$ | 7.6 |
| $3.3 \times 10^{-5}$ | 30 | 30 | $1.3 \times 10^{-5}$ | 11.3 |
| $4.4 \times 10^{-5}$ | 40 | 40 | $1.7 \times 10^{-5}$ | 15.0 |
| $5.5 \times 10^{-5}$ | 50 | 50 | $2.1 \times 10^{-5}$ | 19.0 |
| $6.6 \times 10^{-5}$ | 60 | 60 | $2.5 \times 10^{-5}$ | 22.6 |
| $7.7 \times 10^{-5}$ | 70 | 70 | $2.9 \times 10^{-5}$ | 26.4 |
| $8.8 \times 10^{-5}$ | 80 | 80 | $3.3 \times 10^{-5}$ | 30.2 |
| $9.9 \times 10^{-5}$ | 90 | 90 | $3.7 \times 10^{-5}$ | 34.0 |
| $11.0 \times 10^{-5}$ | 100 | 100 | $4.2 \times 10^{-5}$ | 38.0 |
| $55.0 \times 10^{-5}$ | 500 | 500 | $21.0 \times 10^{-5}$ | 190 |
| $110.0 \times 10^{-5}$ | 1000 | 1000 | $42.0 \times 10^{-5}$ | 380 |

*ppm=parts per million

It has been found that the speed of leak detection is related to the quantity of helium in a given volume of test gas, the greater the volume of helium, the quicker the response. And it has also been found that a particular range of mixture ratios of helium to, say, nitrogen, provides as quick a response in terms of identifying a leak site, as pure helium alone, thereby permitting such tests to be performed using a smaller amount of helium.

Specifically, tests were performed using a known leakage area and subjecting it to a test gas at a given pressure to provide a constant leak rate of the test gas through the leak site. The test gas was a mixture of helium and nitrogen. The ratio of helium to nitrogen was varied and the time for the detector to achieve the maximum reading was measured. The results of that test are presented in Table II below:

7

# EP 0 131 628 B1

## TABLE II

| Helium to nitrogen ratio (by volume) | Leak rate (cm³/sec) | Test pressure (psi) bar | Detection time in sec for maximum reading |
|---|---|---|---|
| 100% Helium | $1.2 \times 10^{-5}$ | (5,800) 400 | 8 |
| 1:1 | $1.2 \times 10^{-5}$ | (5,800) 400 | 8 |
| 1:2 | $1.2 \times 10^{-5}$ | (5,800) 400 | 8 |
| 1:3 | $1.2 \times 10^{-5}$ | (5,800) 400 | 8 |
| 1:4 | $1.2 \times 10^{-5}$ | (5,800) 400 | 8 |
| 1:5 | $1.2 \times 10^{-5}$ | (5,800) 400 | 8 |
| 1:8 | $1.2 \times 10^{-5}$ | (5,800) 400 | 8 |
| 1:9 | $1.2 \times 10^{-5}$ | (5,800) 400 | 10 |
| 1:10 | $1.2 \times 10^{-5}$ | (5,800) 400 | 11 |
| 1:12 | $1.2 \times 10^{-5}$ | (5,800) 400 | 11 |
| 1:14 | $1.2 \times 10^{-5}$ | (5,800) 400 | 12 |

From the results presented in Table II above, it can be seen that helium to nitrogen ratios of as low as 1 part helium to 8 parts nitrogen, by volume, result in the same detection time to achieve a maximum reading on the gas detector. Ratios of 1:9 or less resulted in increased detection times to achieve the maximum reading. Additionally, in using the test gas mixtures as given above, it is preferred that the test pressure be from about 207 bar (3000 psi) to about 1380 bar (20,000 psi) in order to assure detecting even the smallest leak sites within a reasonable time period.

If the time involved to detect a leak is not a critical factor, test gas having even smaller concentrations of helium can be used. The following tests were conducted to permit a determination of the minimum quantity of helium in the test gas to permit a leak to be detected using the GOW-MAC instrument.

A GOW-MAC gas leak detector (Model # 21-250), which detects gases based upon their thermal conductivity as compared with that of air, and a Consolidated Electrodynamics helium mass spectrometer were used to determine the minimum helium to nitrogen operating mixtures which could be detected at a fixed pressure and leak rate. The minimum absolute helium leak rate detectable by the GOW-MAC Unit and the Consolidated Electrodynamics Unit (sold by Du Pont, and henceforth referred to as the Du Pont unit) was also determined.

In performing the testing, helium and nitrogen mixtures of known concentrations were pressurized up to 380 bar (5500 psi) and a test section of pipe was filled with the test gas mixture at that pressure. An enclosure of the type hereinbefore described was placed around the leaking test section and readings were taken from the GOW-MAC tester 30 seconds and 60 seconds after placing the enclosure around the test section. This same procedure was repeated for the Du Pont unit. A fixed leak rate was set with a test gas mixture in which helium was present in an amount of 6.67% by weight with the balance being nitrogen. The leak rate was set so that with that concentration of helium the GOW-MAC unit displayed a scale reading of 3000 after 30 seconds. The same leak rate was used throughout the testing.

Gas mixtures of 6.7% helium and 93.3% nitrogen, by weight; 0.10% helium and 99.90% nitrogen, by weight; 0.020% helium and 99.980% nitrogen, by weight; and 0.0050% helium and 99.9950% nitrogen, by weight, were used in the tests. A calibration gas mixture including $6.65 \times 10^{-7}$ cc-atm/sec of helium was used to calibrate the Du Pont unit in order to permit a determination of the rate of helium leakage. The following equation was used to calculate the absolute helium leak rate using the Du Pont unit: Absolute helium leak rate=sensitivity of the unit×reading on the meter. The sensitivity of the Du Pont unit was determined during calibration. The meter was read at 30 seconds into the test. For a test mixture to be considered detectable, a minimum signal to noise ratio of 4 was selected, which means that the meter on each instrument must read 4 times the noise reading at maximum sensitivity in order for a leak to be considered detectable. The noise reading of each unit at maximum sensitivity was 5, so that the minimum reading on each unit for detecting a leak was 20.

The following parameters were used consistently throughout the testing:

8

| | |
|---|---|
| Pressure in the test section | 380 bar (5500 psi) |
| Temperature of pressurized gas | 25°C (77°F) (ambient) |
| Test enclosure | The embodiment of Figure 2 |
| Maximum noise (each unit) | Reading of 5 at maximum sensitivity |
| Minimum signal to noise ratio for determining a leak | 4 |
| Times readings were taken | 30 seconds and 60 seconds |

## DU PONT UNIT

| | |
|---|---|
| Operating pressure | 0.15 microns |
| Accelerating current | 60% |
| Ionization current | 50% |
| Calibration mixture | $6.56 \times 10^{-7}$ cc-atm/sec helium |
| Sensitivity | As stated in each test (checked during each test) |

Note

A sniffer tube was used on the Du Pont unit throughout testing.
The following tests were conducted:

### TEST #1

| | |
|---|---|
| Gas mixture | 6.7 wt.% helium (33.3 mol %) 93.3 wt.% nitrogen (66.7 mol %) |
| Sensitivity of the Du Pont instrument | $2.73 \times 10^{-10}$ cc-atm/sec helium |

GOW-MAC readings

| Time | Reading |
|---|---|
| 30 sec. | 3000 |
| 60 sec. | 5000 |

Du Pont readings

| Time | Reading |
|---|---|
| 30 sec. | 11000 |
| 60 sec. | 23500 |

| | |
|---|---|
| Absolute helium leak rate | $3.00 \times 10^{-6}$ cc-atm/sec |

### TEST #2

| | |
|---|---|
| Gas mixture | 0.10 wt.% helium, (0.70 mol %) 99.90 wt.% nitrogen, (99.30 mol %) |
| Sensitivity of the Du Pont instrument | $2.73 \times 10^{-10}$ cc-atm/sec helium |

GOW-MAC readings

| Time | Reading |
|---|---|
| 30 sec. | 22 |
| 60 sec. | 38 |

Du Pont readings

| Time | Reading |
|---|---|
| 30 sec. | 5300 |
| 60 sec. | 11000 |

| | |
|---|---|
| Absolute helium leak rate | $1.16 \times 10^{-6}$ cc-atm/sec |

TEST #3

| Gas mixture | 0.020 wt.% helium, (0.14 mol %) |
| | 99.980 wt.% nitrogen, (99.86 mol %) |

| Sensitivity of the Du Pont unit | $1.64 \times 10^{-10}$ cc-atm/sec helium |

GOW-MAC readings

| Time | Reading |
| --- | --- |
| 30 sec. | 0 |
| 60 sec. | 0 |

Du Pont readings

| Time | Reading |
| --- | --- |
| 30 sec. | 60 |
| 60 sec. | 500 |

| Absolute helium leak rate | $1.64 \times 10^{-8}$ cc-atm/sec helium |

TEST #4

| Gas mixture | 0.0050 wt.% helium, (0.035 mol %) |
| | 99.950 wt.% nitrogen, (99.965 mol %) |

| Sensitivity of the Du Pont unit | $2.20 \times 10^{-10}$ cc-atm/sec. |

| GOW-MAC readings | None |

Du Pont readings

| Time | Reading |
| --- | --- |
| 30 sec. | 21 |
| 60 sec. | 321 |

| Absolute helium leak rate | $4.62 \times 10^{-9}$ cc-atm/sec helium |

The GOW-MAC unit displayed a reading after 30 seconds in Test #2 of 22. This is 10% above the minimum reading for accurately detecting a leak using that instrument and thus the Test #2 gas mixture (0.10 wt.% helium—99 wt.% nitrogen, 0.70 mol % helium—99.30 mol % nitrogen) is the lowest helium to nitrogen mixture accurately detectable by the GOW-MAC unit. The extra 10% provides a further safety factor. The minimum detectable helium leak rate under the Test #2 conditions is $1.16 \times 10^{-6}$ cc-atm/sec helium.

Test #4 gives the minimum helium to nitrogen mixture usable with the Du Pont unit and after 30 seconds of leaking, the instrument displayed a reading of 21. This is 5% over the minimum reading for a leak and is considered a further safety factor. Hence a mixture of 0.0050 wt.% helium—99.9950 wt.% nitrogen (0.035 mol % helium—99.965 mol % nitrogen) is considered the minimum helium to nitrogen mixture accurately detectable under operating conditions using the Du Pont unit. The minimum detectable helium leak rate under the Test #4 conditions is $4.62 \times 10^{-9}$ cc-atm/sec helium. Thus, on a volumetric basis, the minimum helium to nitrogen ratio for accurate leak detection using the GOW-MAC unit is 1:142, while that using the Du Pont unit is 1:2856.

## Claims

1. A method of testing for leaks in oil field pipe at a rig floor by using a pressurised gas internal testing tool positioned at a pipe test section, said method comprising: providing a test gas comprising a mixture of a tracer gas and a carrier gas; enclosing an area round the outside of the pipe to define a chamber around the test section; pressurising the pipe at the test section with the test gas at a specified pressure of at least about 207 bar (3000 psi); and sensing the presence of leaking test gas in the chamber enclosing the outside of the test section (whereby the test gas is pressurised to its test pressure away from the rig floor by introducing a liquid under pressure into a remote tank containing the test gas and is used to pressurise the test tool as well as the interior of the pipe at substantially the same pressure.

2. A method according to claim 1, characterised in that the ratio of tracer gas to carrier gas is greater than about 1:2856 by volume.

3. A method according to claim 1 or 2, characterised in that the carrier gas is nitrogen.

4. A method according to any preceding claim, characterised in that the ratio of tracer gas to carrier gas in said test gas is greater than about 1:142 by volume.

5. A method according to any preceding claim, characterised in that the test section in the inside of the

10

pipe is sealed off by actuating the said internal testing tool with said pressurised test gas at said specified pressure, to define an annular space within the test section to confine pressurised test gas therewithin.

6. Apparatus for testing for leaks in oil field pipe at a rig floor by using pressurised gas at a pipe test section, said apparatus comprising: means for providing a single source (1) of pressurised gas comprising a mixture of helium and a carrier gas at a pressure of at least about 207 bar (3000 psi); means (7) for defining a closed volume within said pipe (42) at said test section using said pressurised gas; means (6) for introducing said pressurised gas into said closed volume; means (12) for defining an enclosure around the outside of the pipe at said test section; and means (8, 9) for sensing the presence of leaking gas within said enclosure means, whereby said means for providing a pressurised gas comprises an accumulator; means (1, 1b) for introducing the gas into said accumulator; pressurisation means including means (4, 4b) to introduce liquid under pressure into said accumulator to pressurise said test gas to a pressure of at least about 207 bar (3000 psi); and means (3) for remotely controlling the introduction of test gas and liquid into said accumulator and for controlling the flow of pressurised test gas from said accumulator.

## Patentansprüche

1. Ein Verfahren zum Prüfen auf Lecks in Ölbohrleitungen in der Geräteebene unter Verwenden eines Druckgas-Innenprüfwerkzeuges, das an einem Leitungsprüfabschnitt angeordnet ist, wobei das Verfahren umfaßt: Erzeugen eines Prüfgases mit einer Mischung eines Indikatorgases und eines Trägergases; Umhüllen eines Bereiches um das Äußere der Leitung zum Festlegen einer Kammer um den Prüfabschnitt; Unterdrucksetzen der Leitung bei dem Prüfabschnitt mit dem Testgas mit einem festgelegten Druck von mindestens 207 bar (3000 psi); und Erfassen des Vorliegens von leckendem Prüfgas in der Kammer, die das Äußere des Prüfabschnittes umhüllt, wobei das Prüfgas auf seinen Prüfdruck entfernt von der Geräteebene unter Druck gesetzt wird, indem eine Flüssigkeit unter Druck in einen entfernten, das Prüfgas enthaltenden Tank eingeführt wird und wobei es verwendet wird, um sowohl das Prüfwerkzeug als auch das Innere der Leitung mit einem im wesentlichen gleichen Druck zu beaufschlagen.

2. Ein Verfahren nach Anspruch 1, dadurch gekennzeichnet, daß das Verhältnis des Indikatorgases zu dem Trägergas größer als 1:2856 bezogen auf das Volumen ist.

3. Ein Verfahren nach Anspruch 1 oder 2, dadurch gekennzeichnet, daß das Trägergas Stickstoff ist.

4. Ein Verfahren nach einem der vorhergehenden Ansprüche, dadurch gekennzeichnet, daß das Verhältnis des Indikatorgases zu dem Trägergas in dem Prüfgas größer als 1:142 bezogen auf das Volumen ist.

5. Ein Verfahren nach einem der vorhergehenden Ansprüche, dadurch gekennzeichnet, daß der Testabschnitt im Inneren der Leitung abgedichtet wird, indem das innere Prüfwerkzeug mit dem Unter Druck gesetzten Prüfgas bei dem festgelegten Druck betätigt wird, um einen ringförmigen Raum innerhalb das Prüfabschnittes festzulegen, indem unter Druck gesetztes Prüfgas aufgefangen wird.

6. Vorrichtung zum Prüfen auf Lecks in Ölbohrleitungen in der Geräteebene unter Verwenden von Druckgas an einem Leitungsprüfabschnitt, wobei die Vorrichtung aufweist: eine Einrichtung zum Erzeugen einer einzigen Quelle (1) von Druckgas aus einer Mischung von Helium und einem Trägergas mit einem Druck von wenigstens 207 bar (3000 psi); eine Einrichtung (7) zum Festlegen eines abgeschlossenen Volumens innerhalb der Leitung (42) bei dem Prüfabschnitt unter Verwenden Druckgases; eine Einrichtung (6) zum Einführen des Druckgases in das abgeschlossene Volumen; eine Einrichtung (12) zum Festlegen einer Umhüllung um die Außenseite der Leitung bei dem Prüfabschnitt; und eine Einrichtung (8, 9) zum Erfassen des Vorliegens von leckendem Gas innerhalb der Umhüllungseinrichtung, wobei die Einrichtung zum Erzeugen eines Druckgases einen Sammler, eine Einrichtung (1, 1b) zum Einführen des Gases in den Sammler, eine Einrichtung zum Unterdrucksetzen mit einer Einrichtung (4, 4b) zum Einführen von Flüssigkeit unter Druck in den Sammler zum Unterdrucksetzen des Prüfgases auf einen Druck von wenigstens 207 bar (3000 psi) und eine Einrichtung (3) aufweist, um das Einführen des Prüfgases und der Flüssigkeit in den Sammler zu steuern und um den Fluß des unter Druck gesetzten Prüfgases von dem Sammler zu steuern.

## Revendications

1. Procédé pour tester l'étanchéité des canalisations des champs de pérole au plancher de forage par utilisation d'un instrument d'essai interne à gaz pressurisé, positionné en une section d'essai de la canalisation, ledit procédé comprenant: la fourniture d'un gaz d'essai comprenant un mélange de gaz traceur et de gaz support; la fermeture d'une zone entourant l'extérieur de la canalisation pour définir une chambre autour de la section d'essai; la pressurisation de la canalisation à la section d'essai avec le gaz d'essai à une pression spécifiée d'au moins environ 207 bars; et la détection de la présence d'une fuite de gaz d'essai dans la chambre entourant l'extérieur de la section expérimentale où le gaz d'essai est pressurisé à sa pression d'essai en s'échappant du plancher de forage par introduction d'un liquide sous pression dans une cuve éloignée contenant le gaz d'essai et est utilisé pour pressuriser l'instrument d'essai ainsi que l'intérieur de la canalisation essentiellement à la même pression.

2. Procédé selon la revendication 1, caractérisé en ce que le rapport du gaz traceur au gaz support est supérieur à environ 1:2856 en volume.

3. Procédé selon la revendication 1 ou 2, caractérisé en ce que le gaz support est l'azote.

4. Procédé selon l'une quelconque des revendications précédentes, caractérisé en ce que le rapport du gaz traceur au gaz support dans ledit gaz d'essai est supérieur à environ 1:142 en volume.

5. Procédé selon l'une quelconque des revendications précédentes, caractérisé en ce que la section expérimentale à l'intérieur de la canalisation est isolée par la mise en marche dudit instrument d'essai interne avec ledit gaz d'essai pressurisé à ladite pression spécifiée, pour définir un espace annulaire dans la section expérimentale pour y confiner le gaz d'essai pressurisé.

6. Appareil pour tester l'étanchéité des canalisations des champs de pérole au plancher de forage par utilisation de gaz pressurisé à une section d'essai de la canalisation, ledit appareil comprenant: un moyen pour fournir une source unique (1) de gaz pressurisé comprenant un mélange d'hélium et de gaz support à une pression d'au moins environ 207 bars; un moyen (7) pour définir un volume fermé dans ladite canalisation (42) à ladite section d'essai en utilisant ledit gaz pressurisé; un moyen (6) pour introduire ledit gaz pressurisé dans ledit.volume fermé; un moyen (12) pour définir une fermeture autour de l'extérieur de la canalisation à ladite section d'essai; et un moyen (8, 9) pour détecter la présence d'une fuite de gaz dans ledit moyen de fermeture, où ledit moyen pour fournir un gaz pressurisé comprend un accumulateur; un moyen (1, 1b) pour introduire le gaz dans ledit accumulateur; un moyen de pressurisation incluant un moyen (4, 4b) pour introduire du liquide sous pression dans ledit accumulateur afin de pressuriser ledit gaz d'essai à une pression d'au moins environ 207 bars; et un moyen (3) pour commander à distance l'introduction de gaz d'essai et de liquide dans ledit accumulateur et de commander le débit de gaz d'essai pressurisé provenant dudit accumulateur.

FIG. 1

EP 0 131 628 B1

FIG. 2

FIG. 7

FIG. 3

FIG. 8

FIG. 4

FIG. 6

FIG. 5